# EUROPÄISCHE PATENTSCHRIFT

(11) **EP 0 874 176 B1**
(45) Veröffentlichungstag und Bekanntmachung des Hinweises auf die Patenterteilung: **12.05.2004**
(21) Anmeldenummer: 98104629.5
(22) Anmeldetag: 14.03.1998
(51) Int. Cl.: F16F 7/12, B61G 11/16

(54) **Energieabsorberelement**
Energy absorbing elemnt
Elément pour l'absorption d'énergie

(30) Priorität: 25.04.1997 DE 19717473
(43) Veröffentlichungstag der Anmeldung: 28.10.1998
(73) Patentinhaber: Bombardier Transportation GmbH, 13627 Berlin (DE)
(72) Erfinder: Nohr, Matthias, Dr, 70188 Stuttgart (DE); Bayer, Franz Josef, 71364 Winnenden (DE); Werner, Friedrich, 88239 Wangen (DE); Riegler, Manfred, 90522 Oberasbach (DE)
(74) Vertreter: Thielmann, Andreas

(56) Entgegenhaltungen:
- DE-A- 19 616 944
- DE-U- 29 602 072
- FR-A- 2 698 034
- US-A- 3 591 164
- US-A- 3 624 764
- US-A- 4 829 979
- PATENT ABSTRACTS OF JAPAN vol. 009, no. 261 (M-422), 18. Oktober 1985 (1985-10-18) & JP 60 109630 A (TOYODA CHUO KENKYUSHO KK;OTHERS: 01), 15. Juni 1985 (1985-06-15)

## Beschreibung

Die Erfindung betrifft ein Energieabsorberelement nach dem Oberbegriff des Patentanspruchs 1.

In der Fahrzeugtechnologie kommen Energieabsorberelemente zum Einsatz, bei denen im Schadensfall, beispielsweise bei einem Aufprall auf ein Hindernis, Bewegungsenergie gesteuert auf dafür am Fahrzeug vorgesehene Teile abgebaut wird.

Beispielsweise bei Schienenfahrzeugen müssen zur Einführung neuer Sicherheitsanforderungen im vorderen Bugbereich einer Lokomotive Verfomungsbereiche vorgesehen werden, die, bedingt durch die enorm hohen Zugmassen, im Frontbereich große Energiemengen aufnehmen können. Insbesondere muß der Führerstand bei einem Aufprall ausreichend geschützt werden. Dort ist jedoch der dafür benötigte Bauraum eng begrenzt, so daß im Idealfall eine bereits zur Verfügung stehende Konstruktion für den Einbau eines Energieabsorberelements genutzt werden sollte. Besonders der steife Brüstungsbereich stellt Hohlkammerprofile mit unterschiedlichen Profilquerschnitten und hohem Biegeträgheitsmoment zur Verfügung, die jedoch nur bei einer in der Dimension anpaßbaren Bauweise des Energieabsorberelements genutzt werden können. Eine weitere Einsatzmöglichkeit ergibt sich bei Luftfahrzeugen, beispielsweise in Hubschraubern, in denen Energieabsorberelemente in der Sitzkonstruktion zum Schutz des Piloten bei einem Aufprall eingebaut sind.
Bekannt und in gängigen Lehrbüchern beschrieben sind Stahlrohre, die durch Falten, Verjüngen oder mittels rollender Biegung Energie absorbieren. Für diesen Zweck aus FR 2 698 034 A1 und US 4,829,979 bekannt sind auch Rohre aus faserverstärkten Kunststoffen, die durch Faser/Matrix-Brüche Energie aufnehmen.
Ein Vergleich der unterschiedlichen Werkstoffe in ihrer Eigenschaft, Energie aufzunehmen, zeigt, daß Kunststoffwerkstoffe gegenüber den Metallen um ein vielfaches überlegen sind. Jedoch besitzen die Kunststoffwerkstoffe in der Praxis den Nachteil, daß sich entweder nicht, oder nur mit enormem Aufwand kraftschlüssige Verbindungen zu anderen Bauteilen herstellen lassen.

Die US 3,591,164 offenbart einen Stoßdämpfer, der ein elastisches äußeres Rohr aufweist, das ein bewegliches starres Innenrohr koaxial in der Weise umgibt, dass zwischen dem elastischen Außenrohr und dem starren Innenrohr eine Reibverbindung vorhanden ist. Das elastische Rohr weist über seine Länge eine spiralförmige Wellung auf und kann beispielsweise aus PVC hergestellt sein.

Die US 3,624,764 offenbart einen Stoßdämpfer, der aus zwei ineinander gefügten rohrförmigen Zylindern aufgebaut ist, welche jeweils aus einem zusammenpreßbaren Streckmetall hergestellt sind und wie elastisch-plastische Federn wirken. Die beiden Zylinder sind voneinander durch eine nachgiebige Elastomerhülse getrennt, haben im wesentlichen die gleiche Länge und sind so zueinander angeordnet, dass jeder Zylinder das Ende des anderen Zylinders um einen bestimmten Betrag überragt. An den vorstehenden Enden der Zylinder sind jeweils Endplatten zur Befestigung des Stoßdämpfers angebracht. Ab einer bestimmten Stoßbeanspruchung verformen sich die beiden Zylinder.

Die DE 296 02 072 U1 offenbart eine Vorrichtung zur Aufnahme von Aufprallenergie und zur Aufhängung eines Stoßfängers an einem Fahrzeug. Die Vorrichtung weist ein Stülprohr mit einem inneren und einem äußeren Rohrteil auf. Die Wandung des inneren Rohrteils ist über einen vorbestimmten, sich in Längsachsenrichtung erstreckenden Formbereich derart ausgebildet, dass sie gegenüber der sich daran anschließenden Wandung ein verändertes Widerstandsvermögen gegenüber plastischer Verformung aufweist. Dies wird beispielsweise erreicht, indem das innere Rohrteil zumindest teilweise aus einem gegenüber dem übrigen Rohrteil anderen Material besteht.

Aus der US 4,829,979 ist eine Energieabsorbervorrichtung bekannt, die ein rohrförmiges Energieabsorberelement aufweist, das aus glasfaserverstärktem Polyesterkunststoff hergestellt ist. Dem rohrförmigen Energieabsorberelement sind eine oder mehrere biegbare Stahlplatten zugeordnet, die im Falle eines Aufpralls im wesentlichen rechtwinklig zur Längsachse des rohrförmigen Energieabsorberelements nach außen ausknicken. Für die Funktion dieser bekannten Vorrichtung ist es wichtig, dass die biegbaren Platten miteinander nicht verbunden sind, sodass sie sich bei der Aufnahme von Aufprallkräften unabhängig voneinander verbiegen können. Der Erfindung liegt deshalb die Aufgabe zugrunde, ein Energieabsorberelement anzugeben, das in der Lage ist, einen großen Energieeintrag auf Fahrzeuge aufzunehmen und dabei in seiner Konstruktion variabel gestaltet wird.

Die Erfindung wird durch die Merkmale des Patentanspruchs 1 wiedergegeben. Die weiteren Ansprüche enthalten vorteilhafte Aus- und Weiterbildungen der Erfindung.

Ein wesentlicher Vorteil der Erfindung besteht darin, daß sich bei Verwendung von Metallrohren in einfacher Weise eine kraftschlüssige Flanschverbindung mit Hohlkammerprofilen herstellen läßt Mit ineinander gefügten Rohren, in der Praxis oft ein in oder über ein Metallrohr geschobenes Kunststoffrohr, lassen sich dann auch hohe Energieeinträge auffangen.
Dabei stabilisieren sich im Schadensfall das Metallrohr und das darüber geschobene Kunststoffrohr gegenseitig, so daß einerseits die Knickstabilität des Metallrohres durch das Kunststoffrohr erhöht wird und die Fließeigenschaften bei der Deformation verbessert werden und andererseits das Kunststoffrohr durch das Metallrohr präzise geführt wird.
Ein weiterer wesentlicher Vorteil besteht darin, daß sich durch unterschiedliche Wandstärken und Querschnitte des Metall- und Kunststoffrohrs, die konstruktive Ausführung in einfacher Weise auf vorgegebene Bauteilgeometrien der Trägerelemente anpassen lassen, wobei die schon vorhandenen Hohlräume in den Trägerelementen optimal ausgenutzt werden.

Im folgenden wird die Erfindung anhand von vorteilhaften Ausführungsbeispielen unter Bezugnahme auf schematische Zeichnungen in den Figuren näher erläutert. Es zeigen:
- Fig. 1: Ansicht eines ersten Energieabsorberelements mit innenliegendem Metallrohr;
- Fig.2: Ansicht eines zweiten Energieabsorberelements mit außenliegendem Metallrohr;
- Fig.3: Ansicht des zweiten Energieabsorberelements mit außenliegendem Metallrohr im Schadensfall;
- Fig.4: Ansicht eines dritten Energieabsorberelements mit außenliegendem Metallrohr im Schadensfall;

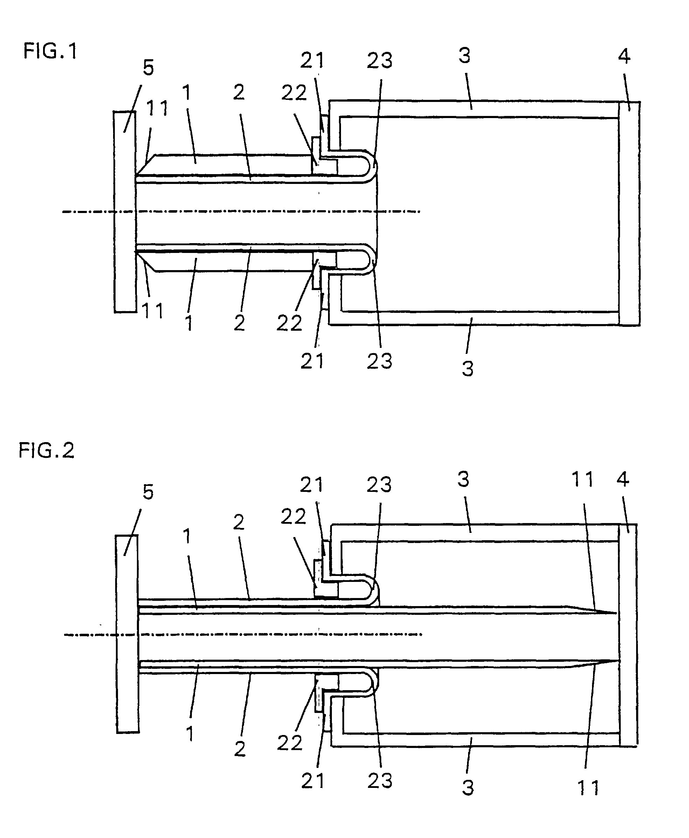

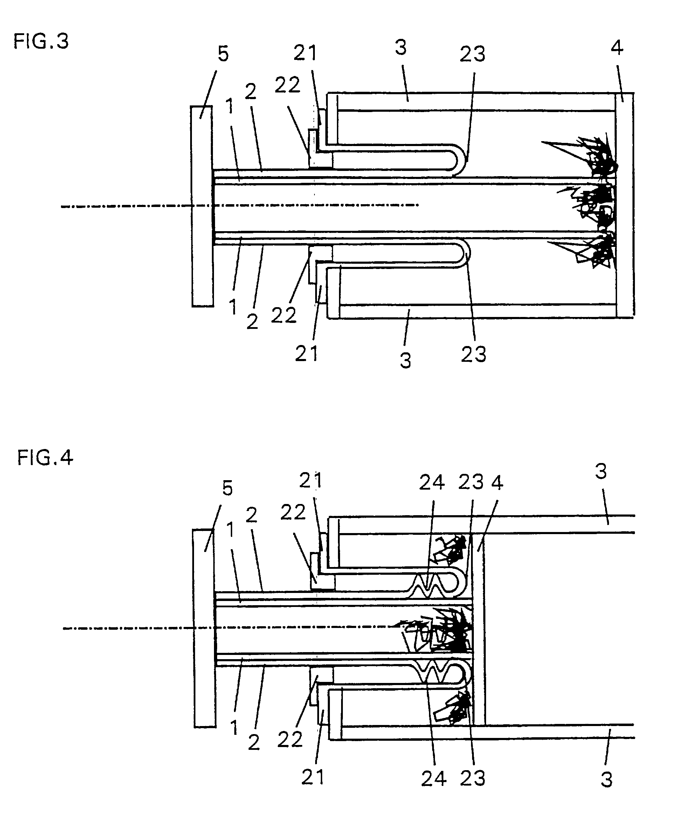

Im Ausführungsbeispiel, gemäß Figur 1, ist ein erstes Energieabsorberelement abgebildet, das über ein zweites rohrförmiges Element 2 aus Metall, an dem sich ein Flanschanschluß 21 befindet, beispielsweise an einem Brüstungsträger befestigt ist. Am Flansch oder als Teil des Flansches ist ein Führungselement 22 verwendet, das ein geradliniges Durchführen des Metallrohres 2 bei der Deformation gewährleistet. Das erste rohrförmige Element 1, beispielsweise aus einem Glasfaserverbundwerkstoff, ist bis zum Führungselement 22 darübergeschoben und wird ohne zusätzliche Befestigung durch das Metallrohr 2 gehaltert. Im Schadensfall findet über das Führungselement 22 die Kraftübertragung auf den Flansch 21 und den Brüstungsträger 3 statt. Das Glasfaserrohr 1 ist an einem Ende mit einer sog. Triggerung 11 versehen, die beispielsweise keilförmig ausgebildet ist. Die Triggerung 11 wird gezielt als Bruchausgangsstelle für das Glasfaserrohr eingesetzt. Im Schadensfall bricht das Glasfaserrohr 1, ausgehend von der Triggerung 11, an der am Metallrohr 2 angebrachte Prallplatte 5 fortlaufend ab. Dabei sorgt die Prallplatte 5 für eine gleichmäßige Krafteinleitung auf beide Rohre 1 und 2. Die Energieaufnahme geschieht beim Metallrohr 2 über den Deformationsbereich 23 in einer fortlaufenden Abrollbewegung des Rohres und beim Glasfaserrohr 1 durch den Bruch in einer dafür vorgesehenen fortlaufenden Bruchzone, ausgehend von der Triggerung 11.
Ein weiteres Ausführungsbeispiel, gemäß Figur 2, zeigt ein zweites Energieabsorberelement mit außenliegendem Metallrohr 2. In einem innenliegenden Glasfaserrohr 1 befindet sich die Triggerung 11 nun innerhalb des Brüstungsträgers an einer Abstützwand 4. Der Bruchverlauf im Schadensfall ist in Figur 3 dargestellt. Ausgehend von der Triggerung bricht das Glasfaserrohr 1 an der Abstützwand 4 stetig ab. Ein Vorteil dieser Anordnung ist, daß das abbrechende Material innerhalb des Trägerhohlraumes eingeschlossen bleibt. Die rollende Verbiegung des Metallrohres 2 wird gezielt durch das Führungselement 22 und das innenliegende Glasfaserrohr 1 gesteuert. Durch unterschiedliche Dicken der beiden Rohre 1 und 2 lassen sich die Kraftübertragung auf die einzelnen Elemente des Brüstungsträgers 3 gezielt steuern. Sollte aus konstruktionsbedingten Gründen beispielsweise die Abstützwand 4 jedoch nicht realisierbar sein, so kann ohne weiteres die in Figur 1 dargestellte Lösung mit innenliegenden Metallrohr verwendet werden.
Ein weiteres Ausführungsbeispiel gemäß Figur 4 zeigt den Fall einer besonders hohen Energieabsorption im Metallrohr 2. Zur abrollenden Verformung kommt in dieser Variante im Bereich 24 eine weitere Verformung durch mehrfaches Knicken des Metalls hinzu, indem die Abstützwand 4 entweder nach vorne verschoben eingebaut wird oder große Deformationswege des Energieabsorberelements zurückgelegt werden.

Die Erfindung ist nicht auf die angegebenen Ausführungsbeispiele beschränkt, sondern ist sinngemäß auf weitere anwendbar. Dabei sind zu einer abrollenden und gefalteten Verformung auch andere Verformungsarten des zweiten rohrförmigen Elementes, wie beispielsweise eine schlingenförmige Verformungen, die durch partielles Ausschäumen des Trägerhohlraumes entstehen könnte, enthalten.

## Patentansprüche

1. Energieabsorberelement, insbesondere Energieabsorberelement für Schienenfahrzeuge, welches aus mehreren ineinandergefügten rohrförmigen Elementen (1, 2) aufgebaut ist, die aus unterschiedlichen Werkstoffen bestehen, **dadurch gekennzeichnet, dass** im Schadensfall ein erstes rohrförmiges Element (1) durch Bruch in einer fortlaufenden Bruchzone des ersten rohrförmigen Elementes (1) und ein zweites rohrförmiges Element (2) durch abrollende Verformung Energie aufnimmt.

2. Energieabsorberelement nach Anspruch 1, **dadurch gekennzeichnet, dass** das erste rohrförmige Element (1) aus einem Kunststoff und/oder aus einem keramischen Material besteht.

3. Energieabsorberelement nach Anspruch 1 oder 2, **dadurch gekennzeichnet, dass** das erste rohrförmige Element (1) eine Triggerung (11) besitzt.

4. Energieabsorberelement nach einem der vorangehenden Ansprüche, **dadurch gekennzeichnet, dass** das erste rohrförmige Element (1) aus einem Verbundwerkstoff, insbesondere aus einem Faserverbundwerkstoff (FVW) besteht, der aus einem Laminat und einer Matrix aufgebaut ist.

5. Energieabsorberelement nach Anspruch 4, **dadurch gekennzeichnet, dass** das Laminat aus Glasfaser-, Kohlefaser-, Naturfaser, Synthesefaserwerkstoff oder aus deren Kombinationen besteht.

6. Energieabsorberelement nach Anspruch 4, **dadurch gekennzeichnet, dass** die Matrix aus einem Duroplast oder einem Thermoplast besteht.

7. Energieabsorberelement nach Anspruch 1, **dadurch gekennzeichnet, dass** das zweite rohrförmige Element (2) an einem Ende einen Flansch (21) zur Kraftübertragung auf eine starre Rahmenkonstruktion, insbesondere auf einen Brüstungsträger (3) besitzt, wobei an dem Flansch (21) oder als Teil des Flansches (21) ein die Verbiegung des zweiten rohrförmigen Elements (2) steuerndes Führungselement (22) vorhanden ist.

8. Energieabsorberelement nach Anspruch 1 oder 7, **dadurch gekennzeichnet, dass** das zweite rohrförmige Element (2) aus einem Metall besteht.

9. Energieabsorberelement nach Anspruch 8, **dadurch gekennzeichnet, dass** das Metall aus einer Stahllegierung oder Aluminiumlegierung besteht.

10. Energieabsorberelement nach einem oder mehreren der vorangehenden Ansprüche, **dadurch gekennzeichnet, dass** die Kraft über eine Prallplatte (5) auf die rohrförmigen Elemente (1, 2) übertragen wird.

11. Energieabsorberelement nach einem der Ansprüche 7-10, **dadurch gekennzeichnet, dass** im Brüstungsträger (3) eine Abstützwand (4) eingebaut ist.

12. Energieabsorberelement nach einem oder mehreren der vorangehenden Ansprüche, **dadurch gekennzeichnet, dass** im Schadensfall das zweite rohrförmige Element (2) außer durch eine abrollende Verbiegung (23) zusätzlich durch eine gefaltete Verformung (24) und/oder eine schlingenartige Verformung Energie aufnimmt.

13. Energieabsorberelement nach einem oder mehreren der Ansprüche 10-12, **dadurch gekennzeichnet, dass** das erste rohrförmige Element (1), ausgehend von der Triggerung (11), an der Abstützwand (4) oder an der Prallplatte (5) durch Bruch Energie aufnimmt.

14. Energieabsorberelement nach einem oder mehreren der vorangehenden Ansprüche, **dadurch gekennzeichnet, dass** das erste rohrförmige Element (1) innenliegend zum zweiten rohrförmigen Element (2) ineinander gefügt ist.

15. Energieabsorberelement nach einem oder mehreren der vorangehenden Ansprüche, **dadurch gekennzeichnet, dass** das zweite rohrförmige Element (2) innenliegend zum ersten rohrförmigen Element (1) ineinander gefügt ist.

## Claims

1. An energy-absorbing element, in particular an energy-absorbing element for railway vehicles, comprising several tubular elements (1, 2) fitted into one another and being of unlike material, **characterized in that** in the case of damaging impact a first element (1) absorbs energy by breakage in a progressive breakage zone of the first tubular element (1) and a second tubular element (2) absorbs energy by rolling deformation.

2. The energy-absorbing element according to claim 1 **characterized in that** the first tubular element (1) consists of a plastic material and/or a ceramic material.

3. The energy-absorbing element according to claim 1 or 2, **characterized in that** the first tubular element (1) has a trigger (11).

4. The energy-absorbing element according to any of the preceding claims, **characterized in that** the first tubular element (1) is of a composite material, in particular of a fiber composite material (FCM) formed of a laminate and a matrix.

5. The energy-absorbing element according to claim 4, **characterized in that** the laminate consists of fiber glass, carbon fiber, natural fiber, synthetic fiber material or a combination thereof.

6. The energy-absorbing element according to claim 4, **characterized in that** the matrix consists of a duroplastic or a thermoplastic.

7. The energy-absorbing element according to claim 1, **characterized in that** the second tubular element (2) is provided at an end with a flange (21) for a transmission of energy to a rigid frame construction, in particular to a railing beam (3), whereby a guide element (22) for controlling the deformation of the second tubular element (2) is provided at the flange (21) or is a part of the flange (21).

8. The energy-absorbing element according to claim 1 or 7, **characterized in that** the second tubular element (2) consists of a metal.

9. The energy-absorbing element according to claim 8, **characterized in that** the metal consists of a steel alloy or an aluminium alloy.

10. The energy-absorbing element according to any of the preceding claims, **characterized in that** the energy is transmitted via an impact plate (5) to the tubular elements (1, 2).

11. The energy-absorbing element according to any of the claims 7 to 10, **characterized in that** a support wall (4) is installed in the railing beam (3).

12. The energy-absorbing element according to any of the preceding claims, **characterized in that** in the case of damaging impact the second tubular element (2) absorbs energy, in addition to a rolling deformation (23), by a buckling deformation (24) and/or a looping deformation.

13. The energy-absorbing element according to any of the claims 10 to 12, **characterized in that** the first tubular element (1), starting at the trigger (11), absorbs energy at the support wall (4) or impact plate (5) by breakage.

14. The energy-absorbing element according to any of the preceding claims, **characterized in that** the first tubular element (1) is fitted inside the second tubular element (2).

15. The energy-absorbing element according to any of the preceding claims, **characterized in that** the tubular element (2) is fitted inside the first tubular element (1).

## Revendications

1. Elément absorbant l'énergie, notamment élément absorbant l'énergie pour véhicules ferroviaires, qui est composé de plusieurs éléments de forme tubulaire (1, 2) assemblés par insertion les uns dans les autres, qui sont composés de matériaux divers, **caractérisé en ce qu'**en cas de dommage, un premier élément de forme tubulaire (1) absorbe l'énergie par rupture dans une zone de rupture continue du premier élément de forme tubulaire et qu'un deuxième élément de forme tubulaire (2) l'absorbe par déformation en déroulement.

2. Elément absorbant l'énergie selon la revendication 1, **caractérisé en ce que** le premier élément de forme tubulaire (1) est composé d'une matière plastique et/ou d'un matériau céramique.

3. Elément absorbant l'énergie selon la revendication 1 ou 2, **caractérisé en ce que** le premier élément de forme tubulaire (1) présente un déclenchement (11).

4. Elément absorbant l'énergie selon l'une quelconque des revendications précédentes, **caractérisé en ce que** le premier élément de forme tubulaire (1) est composé d'un matériau composite, notamment d'un matériau composite fibreux (MCF) qui consiste en un aggloméré laminé et en une matrice.

5. Elément absorbant l'énergie selon la revendication 4, **caractérisé en ce que** l'aggloméré laminé est composé de matériau en fibres de verre, fibres de carbone, fibres naturelles, fibres de synthèse ou leurs combinaisons.

6. Elément absorbant l'énergie selon la revendication 4, **caractérisé en ce que** la matrice est composée de duroplast ou de thermoplast.

7. Elément absorbant l'énergie selon la revendication 1, **caractérisé en ce que** le deuxième élément de forme tubulaire (2) possède à une extrémité une bride (21) servant à la transmission de force à une construction de châssis rigide, notamment à un support de parapet (3), un élément de guidage (22) commandant la courbure du deuxième élément de forme tubulaire (2) étant prévu sur la bride (21) ou en tant que partie de la bride (21).

8. Elément absorbant l'énergie selon la revendication 1 ou 7, **caractérisé en ce que** le deuxième élément de forme tubulaire (2) est composé de métal.

9. Elément absorbant l'énergie selon la revendication 8, **caractérisé en ce que** le métal consiste en un alliage d'acier ou un alliage d'aluminium.

10. Elément absorbant l'énergie selon l'une quelconque ou plusieurs des revendications précédentes, **caractérisé en ce que** la force est transmise par le biais d'une plaque de rebond (5) aux éléments de forme tubulaire (1, 2).

11. Elément absorbant l'énergie selon l'une quelconque des revendications 7 à 10, **caractérisé en ce qu'**une paroi d'appui (4) est intégrée dans le support de parapet (3).

12. Elément absorbant l'énergie selon l'une quelconque ou plusieurs des revendications précédentes, **caractérisé en ce qu'**en cas de dommage, le deuxième élément de forme tubulaire (2) absorbe l'énergie, outre par courbure en déroulement (23), également par déformation pliée (24) et/ou par déformation en lacet.

13. Elément absorbant l'énergie selon l'une quelconque ou plusieurs des revendications 10 à 12, **caractérisé en ce que** le premier élément de forme tubulaire (1), à partir du déclenchement (11), absorbe l'énergie sur la paroi d'appui (4) ou sur la plaque de rebond (5) par rupture.

14. Elément absorbant l'énergie selon l'une quelconque ou plusieurs des revendications précédentes, **caractérisé en ce que** le premier élément de forme tubulaire (1) est assemblé par insertion à l'intérieur du deuxième élément de forme tubulaire (2).

15. Elément absorbant l'énergie selon l'une quelconque ou plusieurs des revendications précédentes, **caractérisé en ce que** le deuxième élément de forme tubulaire (2) est assemblé par insertion à l'intérieur du premier élément de forme tubulaire (1).
